# EUROPÄISCHE PATENTSCHRIFT

(11) **EP 1 226 747 B1**
(45) Veröffentlichungstag und Bekanntmachung des Hinweises auf die Patenterteilung: **21.12.2005**
(21) Anmeldenummer: 02001473.4
(22) Anmeldetag: 22.01.2002
(51) Int. Cl.: A01F 12/10, A01D 61/00

(54) **Leittrommel mit austauschbaren Mitnehmern**
Drum with interchangeable feeding elements
Tambour avec éléments entraîneurs interchangeables

(30) Priorität: 26.01.2001 US 770695
(43) Veröffentlichungstag der Anmeldung: 31.07.2002
(73) Patentinhaber: DEERE & COMPANY, Moline, Illinois 61265-8098 (US)
(72) Erfinder: Gerber, Merle Ray, Moline, IL 61265 (US); Wiegel, Craig Allen, Bettendorf, IA 52722 (US); Selle, Daniel Jeffrey, Brillion, WI 54110 (US)
(74) Vertreter: Holst, Sönke

(56) Entgegenhaltungen:
- WO-A-90/08458
- DE-A- 19 506 060
- FR-A- 2 146 060
- FR-A- 2 354 698
- US-A- 3 630 209
- US-A- 4 657 029
- US-A- 5 112 279
- US-A- 5 676 598

## Beschreibung

Die Erfindung betrifft eine Leittrommel für einen landwirtschaftlichen Mähdrescher, mit einem Rahmen, mindestens einer Antriebswelle zum Drehen des Rahmens, einer ersten Befestigungsplatte und einer zweiten Befestigungsplatte, die am Rahmen befestigt sind und jeweils einen ersten, nach außen gekehrten Abschnitt und einen zweiten, nach außen gekehrten Abschnitt aufweisen, die sich parallel zur Antriebswelle erstrecken.

Quer angeordnete Leit- oder Fördertrommeln (s. US 5 112 279 A oder US 5 676 598 A) werden verwendet, um Erntegut in einen landwirtschaftlichen Mähdrescher hineinzufördern und aus ihm auszuwerfen. Sie werden auch benutzt, um die Bewegung des Ernteguts beim Dresch- und Trennvorgang zu steuern oder zu beeinflussen.

Bei landwirtschaftlichen Mähdreschern, die sich konventioneller Dresch- und Trenntechnologie bedienen, kann eine quer zur Fahrtrichtung angeordnete Leittrommel hinter der quer angeordneten Dreschtrommel und dem Dreschkorb angeordnet sein, um zwischen der Dreschtrommel und dem Dreschkorb herauskommendes Material abzubremsen und es nach unten auf die Vorderseite der Strohschüttler abzulenken. Bei Axialmähdreschern mit axial angeordneten Gutbearbeitungseinheiten werden Leittrommeln benutzt, um Erntegut in die Gutbearbeitungseinrichtung einzuführen und um Gut aus der Gutbearbeitungseinrichtung auszuwerfen.

Es sind vier grundlegende Typen von Leittrommeln bekannt, der Flügeltyp, der Trommeltyp mit entfernbaren Flügeln (Abdeckungszähnen), der Trommeltyp mit Zähnen und der Trommeltyp mit nicht-entfernbaren Flügeln.

Die der Erfindung zugrunde liegende Aufgabe wird darin gesehen, eine verbesserte Leittrommel bereitzustellen.

Diese Aufgabe wird erfindungsgemäß durch die Lehren der Patentansprüche 1 und 11 gelöst, wobei in den weiteren Patentansprüchen Merkmale aufgeführt sind, die die Lösung in vorteilhafter Weise weiterentwickeln.

Der Rahmen der Förder- oder Leittrommel definiert eine zylindrische Umfangsfläche, an der über die Umfangsfläche verteilte Befestigungsplatten angebracht sind. An ihren einander zugekehrten Endseiten weisen benachbarte Befestigungsplatten jeweils nach außen gekehrte Abschnitte auf, zwischen denen Befestigungskanäle definiert sind, die sich parallel zur Antriebswelle erstrecken. In den Befestigungskanälen sind ersetzbare Mitnehmer befestigt, die vorzugsweise plattenförmig und zum Eingriff in das Gut geeignet sind. Die Mitnehmer sind mit einem Guteingriffsabschnitt und einem damit einteiligen Befestigungsabschnitt ausgestattet. Der Guteingriffsabschnitt des ersetzbaren Mitnehmers erstreckt sich vom Befestigungskanal nach außen, um in das zu fördernde Erntegut einzugreifen. Der Befestigungsabschnitt ist im Befestigungskanal festgelegt.

Auf diese Weise erhält man eine einfach aufgebaute Leittrommel, an der die Mitnehmer austauschbar sind.

Die Befestigungsplatten erstrecken sich in der Regel parallel zur Antriebswelle der Leittrommel. Denkbar wäre aber auch, mehrere kürzere Befestigungsplatten in Achsrichtung hintereinander anzuordnen.

Zwischen benachbarten Mitnehmern können offene Lücken im Befestigungskanal verbleiben. Sie ermöglichen, dass eventuell in den Innenraum der Leittrommel eingedrungenes Gut durch Zentrifugalkräfte wieder ausgeworfen wird.

Der Befestigungskanal, in dem der Befestigungsabschnitt des ersetzbaren Mitnehmers aufgenommen wird, befindet sich in der Regel zwischen dem ersten, nach außen gekehrten Abschnitt einer ersten Befestigungsplatte und dem zweiten, nach außen gekehrten Abschnitt einer benachbarten, zweiten Befestigungsplatte. Der Befestigungsabschnitt des ersetzbaren Mitnehmers wird somit sandwichartig im Kanal eingeklemmt. Denkbar wäre aber auch, den Befestigungskanal an der Außenseite des ersten oder zweiten Abschnitts vorzusehen.

Vorzugsweise ist der Guteingriffsabschnitt der ersetzbaren Mitnehmer mit einer ersten und/oder einer zweiten Befestigungsnase ausgestattet. Die ersten bzw. zweite Befestigungsnase befindet sich im Eingriff mit ersten und zweiten Befestigungskanten am ersten bzw. zweiten nach außen gekehrten Abschnitt, um eine Drehung des ersetzbaren Mitnehmers zu verhindern.

Der Guteingriffsabschnitt kann weiterhin mit zwei Nuten versehen sein, die drei in das Gut eingreifende Zähne definieren.

Zur Befestigung der Mitnehmer kann ihr Befestigungsabschnitt mit einem Befestigungsloch versehen sein, durch das sich eine Befestigungsschraube erstreckt, welche den ersetzbaren Mitnehmer im Befestigungskanal fixiert.

Die oben erwähnten Lücken in der Oberfläche der Leittrommel zwischen benachbarten ersetzbaren Mitnehmern können durch eine entsprechende zinnenartige Konfiguration der nach außen gekehrten Abschnitte der Befestigungsplatten erzielt werden.

Ein erfindungsgemäßer Mitnehmer für eine Leittrommel eines Mähdreschers weist einen Befestigungsabschnitt und einen Guteingriffsabschnitt auf. Auf mindestens einer Seite ist der Guteingriffsabschnitt mit einer Befestigungsnase versehen, die eine drehfeste Anbringung ermöglicht. Der Befestigungsabschnitt ist mit dem Guteingriffsabschnitt einteilig und weist ein Loch zur Aufnahme einer Befestigungsschraube auf. Der Mitnehmer ist vorteilhafterweise plattenförmig.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers,
- Fig. 2: eine perspektivische Ansicht einer zur Beschleunigung dienenden Leittrommel,
- Fig. 3: eine Seitenansicht der Leittrommel, und
- Fig. 4: eine perspektivische Ansicht eines der ersetzbaren Mitnehmer.

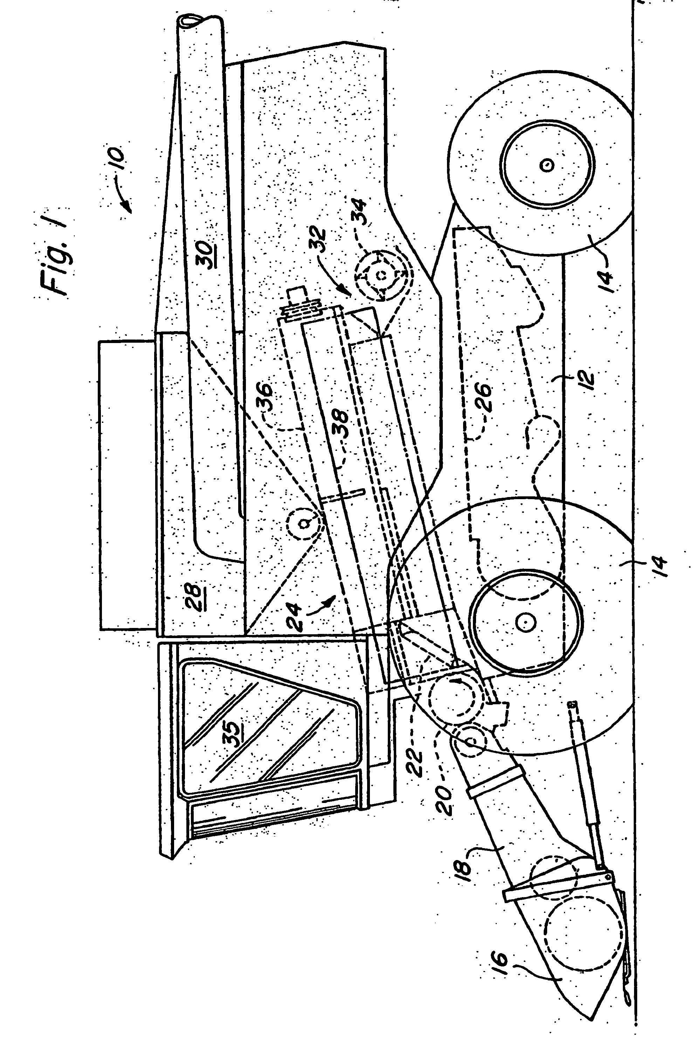

Die Figur 1 zeigt einen landwirtschaftlichen Mähdrescher 10 mit einem Chassis 12 und sich von diesem nach unten erstreckenden Bodenlaufrädern 14. Obwohl der Mähdrescher 10 mit Rädern 14 dargestellt ist, könnte er auch mit zwei oder vier Raupenketten ausgestattet sein. Eine Erntegutbergungsvorrichtung 16 wird verwendet, Erntegut zu ernten und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Im Folgenden beziehen sich alle Richtungsangaben (wie vorn, hinten, quer) auf die Vorwärtsfahrtrichtung des Mähdreschers 10.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn ip einem Korntank 28 ab. Das saubere Korn im Korntank 28 kann durch eine Entladeschnecke 30 auf einen Anhänger oder Lastwagen entladen werden.

Gedroschenes, vom Korn befreites Stroh wird aus der Axialtrennvorrichtung 24 durch einen Auslass 32 zu einer Abgabetrommel 34 herausgeführt. Die Abgabetrommel 34 wirft wiederum das Stroh am rückwärtigen Ende des Mähdreschers 10 aus. Es ist anzumerken, dass die Abgabetrommel 34 das von Korn befreite Erntegut auch direkt einem Strohhäcksler zuführen könnte. Der Betrieb des Mähdreschers 10 wird von einer Fahrerkabine 35 aus gesteuert.

Die Axialtrennvorrichtung 24 umfasst ein zylindrisches Rotorgehäuse 36 und einen im Rotorgehäuse 36 angeordneten Rotor 38. Die in Vorwärtsfahrtrichtung vorderen Teile des Rotors 38 und des Rotorgehäuses 36 definieren den Beschickungsabschnitt der Axialtrennvorrichtung 24. In Längsrichtung des Rotors 38 stromabwärts des Beschickungsabschnitts befindet sich ein Dreschabschnitt, ein Trennabschnitt und ein Auslassabschnitt. Der Rotor 38 ist im Beschickungsabschnitt mit einer konischen Rotortrommel mit spiralwendelförmigen Beschickungselementen zum Erfassen von Erntegut ausgestattet, das er von der Leittrommel 20 und dem Einlassübergangsbereich 22 empfängt. Unmittelbar stromabwärts des Beschickungsabschnitts ist der Dreschabschnitt der Axialtrennvorrichtung 24. Im Dreschabschnitt umfasst der Rotor 38 eine zylindrische Rotortrommel mit einer Anzahl an Dreschelementen, um das Erntegut zu dreschen, das vom Beschickungsabschnitt empfangen wird. Stromabwärts des Dreschabschnitts ist der Trennabschnitt, in dem das im Erntegut gefangene Korn freigesetzt wird und durch ein bodenseitiges Rost in das Reinigungssystem 26 fällt. Der Trennabschnitt geht in einen Auslassabschnitt über, in dem Erntegut, das kein Korn enthält, aus der Axialtrennvorrichtung 24 ausgeworfen wird.

Die vorliegende Erfindung bezieht sich auf die Konfiguration einer Leittrommel für landwirtschaftliche Anwendungszwecke. Die vorliegende Leittrommel kann als zur Beschickung dienende Leittrommel 20 oder als zum Austragen dienende Leittrommel 34 verwendet werden. Die Erfindung beschränkt sich weiterhin nicht auf Mähdrescher mit Axialtrennvorrichtungen 24. Die vorliegende Erfindung kann auch an konventionellen Mähdreschern mit Strohschüttlern oder anderen Typen landwirtschaftlicher Mähdrescher benutzt werden. Die Beschreibung bezieht sich jedoch als Beispiel für eine landwirtschaftliche Leittrommel auf die zur Beschickung dienende Leittrommel 20.

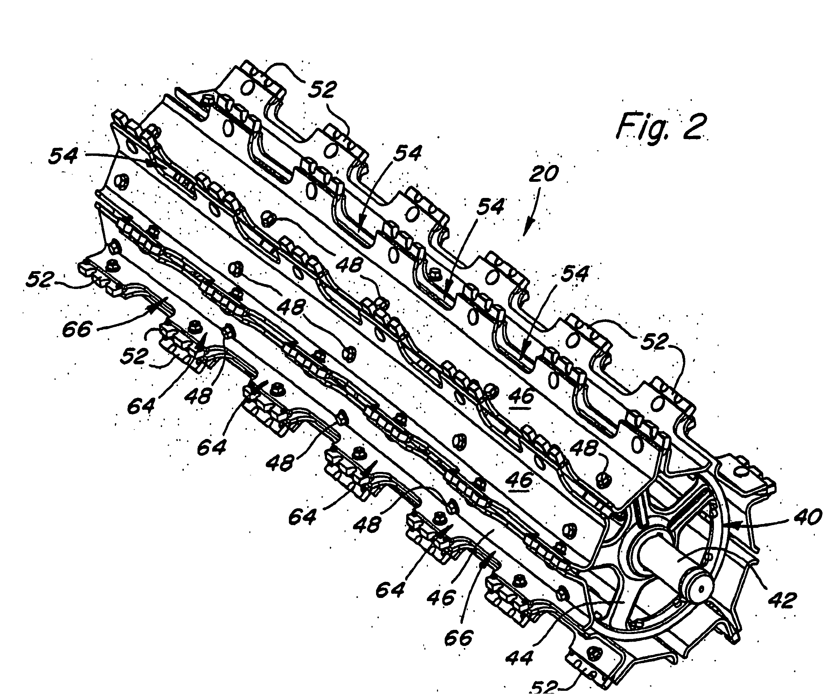

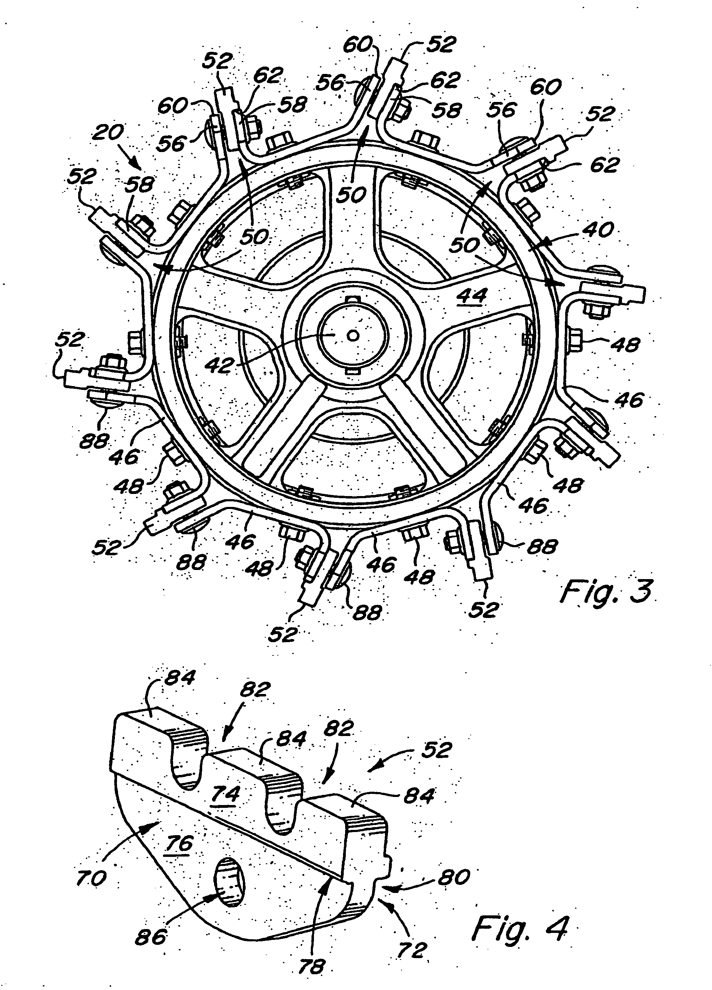

Die Einzelheiten des Aufbaus der zur Beschickung dienenden Leittrommel 20 sind am Besten in den Figuren 2 und 3 dargestellt. Die Leittrommel 20 umfasst einen offenen Rahmen 40, der wenigstens eine sich durch ihn hindurch erstreckende Antriebswelle 42 aufweist. Der offene Rahmen 40 wird von einer Vielzahl sternförmiger Rahmen 44 gebildet, die an der Antriebswelle 42 über deren Länge verteilt angebracht sind. Die Außenseite des Rahmens 40 definiert eine Umfangsfläche mit der Form eines Zylinders. Eine Vielzahl an quer angeordneten Befestigungsplatten 46 sind durch Plattenbefestigungsschrauben 48 an den sternförmigen Rahmen 44 festgeschraubt. Benachbarte Befestigungsplatten 46 bilden einen Befestigungskanal 50, in dem eine Vielzahl ersetzbarer plattenförmiger Mitnehmer 52 befestigt sind. Eine offene Lücke 54 ist zwischen ersetzbaren Mitnehmer 52 im Befestigungskanal 50 geformt. Diese offenen Lücken 54 ermöglichen es, dass im Inneren des Rahmens 40 gefangenes Erntegut durch die Zentrifugalkraft aus dem Rahmen 40 ausgeworfen wird.

Jede der Befestigungsplatten 46 hat einen ersten, nach außen gekehrten (abgewinkelten) Abschnitt 56 und einen zweiten, nach außen gekehrten (abgewinkelten) Abschnitt 58. Der erste nach außen gekehrte Abschnitt 56 hat eine erste Befestigungskante 60 und der zweite nach außen gekehrte Abschnitt 58 hat eine zweite Befestigungskante 62. Der erste nach außen gekehrte Abschnitt 56 einer ersten Befestigungsplatte 46 und ein zweiter, nach außen gekehrter Abschnitt 58 einer benachbarten, zweiten Befestigungsplatte 46 bilden den Befestigungskanal 50. Die benachbarten, nach außen gekehrten Abschnitte 56 und 58 schließen die ersetzbaren Mitnehmer 52 nach Art eines Sandwichs zwischen sich ein. Wie am Besten in der Figur 2 dargestellt, haben die nach außen gekehrten Abschnitte 56, 58 eine zinnenartige Konfiguration mit angehobenen Flächen 64 und abgesenkten Flächen 66. Die angehobenen Flächen 64 definieren Befestigungsstellen für die ersetzbaren Mitnehmer 52. Die abgesenkten Flächen 66 definieren die Stellen, an denen sich die offenen Lücken 54 befinden.

Die ersetzbaren Mitnehmer 52 haben eine erste Seite 70 und eine zweite Seite 72. Jeder ersetzbarer Mitnehmer 52 ist in einen Guteingriffsabschnitt 74, der sich vom Befestigungskanal 50 nach außen erstreckt, und einen Befestigungsabschnitt 76 unterteilt, der im Befestigungskanal 50 angeordnet ist. Der Guteingriffsabschnitt 74 ist an seiner ersten Seite 70 mit einer ersten Befestigungsnase 78 und an seiner zweiten Seite 72 mit einer zweiten Befestigungsnase 80 ausgestattet. Die Befestigungsnasen 78 und 80 drücken gegen die entsprechende erste und zweite Befestigungskante 60 und 62, um eine Drehung des ersetzbaren Mitnehmers 52 zu verhindern. Der Guteingriffsabschnitt 74 ist außerdem mit zwei Nuten 82 versehen, die drei in das Gut eingreifende Zähne 84 definieren. Der Befestigungsabschnitt 76 jedes ersetzbaren Mitnehmers 52 ist mit einem Befestigungsloch 86 ausgestattet, durch das sich eine Befestigungsschraube 88 erstreckt, welche den Mitnehmer 52 im Befestigungskanal 50 fixiert.

## Patentansprüche

1. Leittrommel (20) für einen landwirtschaftlichen Mähdrescher (10), mit einem Rahmen (40), mindestens einer Antriebswelle (42) zum Drehen des Rahmens (40), einer ersten Befestigungsplatte (46) und einer zweiten Befestigungsplatte (46), die am Rahmen (40) befestigt sind und jeweils einen ersten, nach außen gekehrten Abschnitt (56) und einen zweiten, nach außen gekehrten Abschnitt (58) aufweisen, die sich parallel zur Antriebswelle (42) erstrecken, **dadurch gekennzeichnet, dass** der erste Abschnitt (56) der ersten Befestigungsplatte (46) und der zweite Abschnitt (58) der zweiten Befestigungsplatte (46) gemeinsam einen Befestigungskanal (50) bilden, und dass ein ersetzbarer Mitnehmer (52) im Befestigungskanal (50) befestigt ist, der einen Befestigungsabschnitt (76) und einen Guteingriffsabschnitt (74) hat, der sich vom Befestigungskanal (50) nach außen erstreckt.

2. Leittrommel (20) nach Anspruch 1, **dadurch gekennzeichnet, dass** sich die Befestigungsplatten (46) parallel zur Antriebswelle (42) erstrecken.

3. Leittrommel (20) nach Anspruch 1 oder 2, **dadurch gekennzeichnet, dass** ein zweiter, ersetzbarer Mitnehmer (52) derart im Befestigungskanal (50) befestigt ist, dass eine offene Lücke (54) zwischen einem ersten Mitnehmer (52) und dem zweiten Mitnehmer (52) verbleibt.

4. Leittrommel (20) nach einem der Ansprüche 1 bis 3, **dadurch gekennzeichnet, dass** der Befestigungsabschnitt (76) des Mitnehmers (52) zwischen dem ersten, nach außen gekehrten Abschnitt (56) der ersten Befestigungsplatte (46) und dem zweiten, nach außen gekehrten Abschnitt (58) der zweiten Befestigungsplatte (46) angeordnet ist.

5. Leittrommel (20) nach einem der Ansprüche 1 bis 4, **dadurch gekennzeichnet, dass** der erste, nach außen gekehrte Abschnitt (56) der ersten Befestigungsplatte (46) mit einer ersten Befestigungskante (60) ausgestattet ist, und dass der Mitnehmer (52) mit einer ersten Befestigungsnase (78) ausgestattet ist, die sich an der ersten Befestigungskante (60) abstützt.

6. Leittrommel (20) nach einem der Ansprüche 1 bis 5, **dadurch gekennzeichnet, dass** der zweite, nach außen gekehrte Abschnitt (58) der zweiten Befestigungsplatte (46) mit einer zweiten Befestigungskante (62) ausgestattet ist, und dass der Mitnehmer (52) mit einer zweiten Befestigungsnase (80) ausgestattet ist, die sich an der zweiten Befestigungskante (60) abstützt.

7. Leittrommel (20) nach Anspruch 5 oder 6, **dadurch gekennzeichnet, dass** die erste und zweite Befestigungsnase (78, 80) des ersetzbaren Mitnehmers (52) ein Teil des Guteingriffsabschnitts (74) sind.

8. Leittrommel (20) nach einem der Ansprüche 1 bis 7, **dadurch gekennzeichnet, dass** der Guteingriffsabschnitt (74) des Mitnehmers (52) mit wenigstens drei Nuten (82) versehen ist, die drei in das Gut eingreifende Zähne (84) definieren.

9. Leittrommel (20) nach einem der Ansprüche 1 bis 8, **dadurch gekennzeichnet, dass** der ersetzbare Mitnehmer (52) durch eine Befestigungsschraube (88), die sich durch den Befestigungsabschnitt (76) erstreckt, am Befestigungskanal (50) befestigt ist.

10. Leittrommel (20) nach einem der Ansprüche 3 bis 9, **dadurch gekennzeichnet, dass** der erste, nach außen gekehrte Abschnitt (56) und der zweite, nach außen gekehrte Abschnitt (58) eine zinnenartige Konfiguration mit angehobenen Flächen (64) und abgesenkten Flächen (66) aufweisen, wobei die angehobenen Flächen (64) Befestigungsstellen für die ersetzbaren Mitnehmer (52) und die abgesenkten Flächen (66) Stellen definieren, an denen sich die offenen Lücken (54) befinden.

11. Ersetzbarer Mitnehmer (52) für eine Leittrommel (20) eines landwirtschaftlichen Mähdreschers (10), **dadurch gekennzeichnet, dass** der Mitnehmer (52) einen Guteingriffsabschnitt (74) und einen Befestigungsabschnitt (76) umfasst, dass der Guteingriffsabschnitt (74) eine erste, mit einer sich quer erstreckenden Befestigungsnase (78) versehene Seite (70) und eine zweite Seite (72) aufweist, und dass der Befestigungsabschnitt (76) mit dem Guteingriffsabschnitt (74) einteilig ist und ein Befestigungsloch (86) zur Aufnahme einer Befestigungsschraube (88) aufweist.

12. Mitnehmer (52) nach Anspruch 11, **dadurch gekennzeichnet, dass** die zweite Seite (72) des Guteingriffsabschnitts (74) mit einer zweiten, sich quer erstreckenden Befestigungsnase (80) ausgestattet ist.

13. Mitnehmer (52) nach Anspruch 11 oder 12, **dadurch gekennzeichnet, dass** der Guteingriffsabschnitt (74) des Mitnehmers (52) mit wenigstens drei Nuten (82) versehen ist, die drei Zähne (84) definieren.

## Claims

1. Beater (20) for an agricultural combine harvester (10), with a frame (40), at least one drive shaft (42) for rotating the frame (40), a first mounting plate (46) and a second mounting plate (46), which are fastened to the frame (40) and respectively have a first outwardly facing portion (56) and a second outwardly facing portion (58), which extend parallel to the drive shaft (42), **characterised in that** the first portion (56) of the first mounting plate (46) and the second portion (58) of the second mounting plate (46) jointly form a mounting channel (50), and that a replaceable blade (52) is fastened in the mounting channel (50), which has a mounting portion (76) and a crop engaging portion (74), which extends outwards from the mounting channel (50).

2. Beater (20) according to Claim 1, **characterised in that** the mounting plates (46) extend parallel to the drive shaft (42).

3. Beater (20) according to Claim 1 or 2, **characterised in that** a second replaceable blade (52) is fastened in the mounting channel (50) in such a way that an open gap (54) remains between a first blade (52) and the second blade (52).

4. Beater (20) according to one of Claims 1 to 3, **characterised in that** the mounting portion (76) of the blade (52) is arranged between the first outwardly facing portion (56) of the first mounting plate (46) and the second outwardly facing portion (58) of the second mounting plate (46).

5. Beater (20) according to one of Claims 1 to 4, **characterised in that** the first outwardly facing portion (56) of the first mounting plate (46) is equipped with a first mounting edge (60), and that the blade (52) is equipped with a first mounting lip (78), which abuts against the first mounting edge (60).

6. Beater (20) according to one of Claims 1 to 5, **characterised in that** the second outwardly facing portion (58) of the second mounting plate (46) is equipped with a second mounting edge (62), and that the blade (52) is equipped with a second mounting lip (80), which abuts against the second mounting edge (60).

7. Beater (20) according to Claim 5 or 6, **characterised in that** the first and second mounting lips (78, 80) of the replaceable blade (52) are part of the crop engaging portion (74).

8. Beater (20) according to one of Claims 1 to 7, **characterised in that** the crop engaging portion (74) of the blade (52) is provided with at least three grooves (82), which define three teeth (84) engaging into the crop.

9. Beater (20) according to one of Claims 1 to 8, **characterised in that** the replaceable blade (52) is fastened on the mounting channel (50) through a mounting bolt (88), which extends through the mounting portion (76).

10. Beater (20) according to one of Claims 3 to 9, **characterised in that** the first outwardly facing portion (56) and the second outwardly facing portion (58) have a castellated configuration with raised areas (64) and sunken areas (66), wherein the raised areas (64) define mounting locations for the replaceable blades (52) and the sunken areas (66) define locations, at which the open gaps (54) are located.

11. Replaceable blade (52) for a beater (20) of an agricultural combine harvester (10), **characterised in that** the blade (52) comprises a crop engaging portion (74) and a mounting portion (76), that the crop engaging portion (74) has a first side (70) provided with a transversely extending mounting lip (78) and a second side (72), and that the mounting portion (76) is in one piece with the crop engaging portion (74) and has a fastening hole (86) to receive a mounting bolt (88).

12. Blade (52) according to Claim 11, **characterised in that** the second side (72) of the crop engaging portion (74) is equipped with a second transversely extending mounting lip (80).

13. Blade (52) according to Claim 11 or 12, **characterised in that** the crop engaging portion (74) of the blade (52) is provided with at least three grooves (82), which define three teeth (84).

## Revendications

1. Tambour directeur (20) pour une moissonneuse-batteuse (10) agricole, comprenant un cadre (40), au moins un arbre d'entraînement (42) pour la rotation du cadre (40), une première plaque de fixation (46) et une seconde plaque de fixation (46), qui sont fixées sur le cadre (40) et présentent chacune une première partie (56) tournée vers l'extérieur et une seconde partie (58) tournée vers l'extérieur, qui s'étendent parallèlement à l'arbre d'entraînement (42), **caractérisé en ce que** la première partie (56) de la première plaque de fixation (46) et la seconde partie (58) de la seconde plaque de fixation (46) forment ensemble un canal de fixation (50), et **en ce qu'**un élément entraîneur (52) remplaçable est fixé dans le canal de fixation (50), qui a une partie de fixation (76) et une partie d'engagement (74) dans la récolte, qui s'étend du canal de fixation (50) vers l'extérieur.

2. Tambour directeur (20) selon la revendication 1, **caractérisé en ce que** les plaques de fixation (46) s'étendent parallèlement à l'arbre d'entraînement (42).

3. Tambour directeur (20) selon la revendication 1 ou 2, **caractérisé en ce qu'**un deuxième élément entraîneur (52) remplaçable est fixé dans le canal de fixation (50) de telle sorte qu'un creux (54) ouvert reste entre un premier élément entraîneur (52) et le second élément entraîneur (52).

4. Tambour directeur (20) selon l'une quelconque des revendications 1 à 3, **caractérisé en ce que** la partie de fixation (76) de l'élément entraîneur (52) est disposée entre la première partie (56), tournée vers l'extérieur, de la première plaque de fixation (46) et la seconde partie (58), tournée vers l'extérieur, de la seconde plaque de fixation (46).

5. Tambour directeur (20) selon l'une quelconque des revendications 1 à 4, **caractérisé en ce que** la première partie (56), tournée vers l'extérieur, de la première plaque de fixation (46) est équipée d'un premier bord de fixation (60) et **en ce que** l'élément entraîneur (52) est équipé d'un premier taquet de fixation (78), qui s'appuie sur le premier bord de fixation (60).

6. Tambour directeur (20) selon l'une quelconque des revendications 1 à 5, **caractérisé en ce que** la seconde partie (58), tournée vers l'extérieur, de la seconde plaque de fixation (46) est équipée d'un second bord de fixation (62) et **en ce que** l'élément entraîneur (52) est équipé d'un second taquet de fixation (80), qui s'appuie sur le second bord de fixation (60).

7. Tambour directeur (20) selon la revendication 5 ou 6, **caractérisé en ce que** le premier et le second taquets de fixation (78, 80) de l'élément entraîneur (52) remplaçable constituent une portion de la partie d'engagement (74) dans la récolte.

8. Tambour directeur (20) selon l'une quelconque des revendications 1 à 7, **caractérisé en ce que** la partie d'engagement (74) dans la récolte de l'élément entraîneur (52) est pourvue d'au moins trois rainures (82) qui définissent trois dents (84) s'engageant dans la récolte.

9. Tambour directeur (20) selon l'une quelconque des revendications 1 à 8, **caractérisé en ce que** le premier élément entraîneur (52) remplaçable est fixé sur le canal de fixation (50) par une vis de fixation (88) qui s'étend à travers la partie de fixation (76).

10. Tambour directeur (20) selon l'une quelconque des revendications 3 à 9, **caractérisé en ce que** la première partie (56) tournée vers l'extérieur et la seconde partie (58) tournée vers l'extérieur présentent une configuration en forme de créneau avec des surfaces (64) surélevées et des surfaces (66) abaissées, les surfaces (64) surélevées définissant des points de fixation pour les éléments entraîneurs (52) remplaçables et les surfaces (66) abaissées des endroits sur lesquels se trouvent les creux (54) ouverts.

11. Elément entraîneur (52) remplaçable pour un tambour directeur (20) d'une moissonneuse-batteuse (10) agricole, **caractérisé en ce que** l'élément entraîneur (52) comprend une partie d'engagement (74) dans la récolte et une partie de fixation (76), **en ce que** la partie d'engagement (74) dans la récolte présente un premier côté (70) pourvu d'un taquet de fixation (78) s'étendant transversalement et un second côté (72), et **en ce que** la partie de fixation (76) est d'une seule pièce avec la partie d'engagement (74) dans la récolte et présente un trou de fixation (86) pour le logement d'une vis de fixation (88).

12. Elément entraîneur (52) selon la revendication 11, **caractérisé en ce que** le second côté (72) de la partie d'engagement (74) dans la récolte est équipé d'un second taquet de fixation (80) s'étendant transversalement.

13. Elément entraîneur (52) selon la revendication 11 ou 12, **caractérisé en ce que** la partie d'engagement (74) dans la récolte de l'élément entraîneur (52) est dotée d'au moins trois rainures (82) qui définissent trois dents (84).
